# EUROPÄISCHE PATENTSCHRIFT

(11) **EP 1 161 856 B1**
(45) Veröffentlichungstag und Bekanntmachung des Hinweises auf die Patenterteilung: **18.02.2004**
(21) Anmeldenummer: 01110716.6
(22) Anmeldetag: 03.05.2001
(51) Int. Cl.: A01C 17/00, A01C 15/00

(54) **Zentrifugalstreuer, insbesondere Düngerstreuer**
Centrifugal distributer, notably fertilizer spreader
Engin de distribution à distributeur centrifuge, notamment épandeur d'engrais

(30) Priorität: 07.06.2000 DE 10028236
(43) Veröffentlichungstag der Anmeldung: 12.12.2001
(73) Patentinhaber: RAUCH LANDMASCHINENFABRIK GMBH, D-76547 Sinzheim (DE)
(72) Erfinder: Velten, Michael, 76547 Sinzheim (DE); Zwigart, Dirk, 77836 Rheinmünster (DE); Rauch, Norbert, 76547 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 458 107
- EP-A- 0 635 196
- EP-A- 0 702 889
- WO-A-88/09609
- DE-A- 3 820 681

## Beschreibung

Die Erfindung betrifft einen Zentrifugalstreuer, insbesondere Düngerstreuer, mit zwei um parallele Achsen gegensinnig umlaufenden Streuscheiben, die das aus einem Behälter dosiert aufgegebene Streugut in zwei einander überlappenden Streufächern abgeben, und mit einer wahlweise in wenigstens einen der Streufächer einbringbaren Einrichtung zum Grenzoder Randstreuen mit aufrechten Leitplatten zur einseitigen Reduzierung der Streubreite und Änderung des Streubildes, die an ihren der Streuscheibe zugekehrten inneren Enden an aufrechten Achsen winkelverstellbar gelagert sind, wobei die Leitplatten zweiteilig ausgebildet sind und die äußeren Leitplatten mit ihren inneren Enden an aufrechten Achsen winkelverstellbar gelagert sind. Ferner betrifft die Erfindung die Verwendung einer Einrichtung zum Grenz- oder Randstreuen an Zentrifugalstreuern, insbesondere Düngerstreuern.

Beim Normalstreuen mit einem Zentrifugalstreuer des vorgenannten Aufbaus wird das Streugut nach beiden Seiten gleichmäßig, jedoch mit unterschiedlicher Streudichte verteilt. Die Streudichte ist in Fahrtrichtung unmittelbar hinter dem Zentrifugalstreuer am größten und fällt zur Seite hin ab. Dabei wird auf der Streubreite ein Streubild mit flacher dreieckförmiger Verteilung angestrebt. Beim Anschlußfahren werden die Streubilder derart überlappt, daß sich eine gleichmäßige Düngerverteilung auf der gesamten Arbeitsbreite ergibt.

Beim Grenz- oder Randstreuen muß das Streubild an der der Grenze zugekehrten Seite verändert werden, um einerseits ein Überstreuen der Grenze zu vermeiden, andererseits bis zur Grenze eine möglichst gleichmäßige Streudichte zu erhalten. Ein solches Grenzstreubild sollte die Streudichte, die zwischen den Streuscheiben gegeben ist, bis zur Grenze aufweisen und dort steil abfallen. Von Grenzstreuen spricht man dann, wenn die steile Flanke des Streubildes auf der Grenze endet, so daß ein schmaler Streifen unmittelbar an der Grenze unterversorgt ist, während beim Randstreuen die steile Flanke an der Grenze ansetzt und jenseits der Grenze endet.

Die Erzeugung eines solchen Grenzstreubildes erfordert eine Änderung der Abwurfcharakteristik an der der Grenze zugekehrten Streuscheibe. So sind spezielle Grenzstreuscheiben bekannt, die der Landwirt im Bedarfsfall auf der Grenzseite einwechseln muß. Ferner sind Streuscheiben bekannt, deren Wurfschaufeln derart einstellbar und/oder gegen andere Wurfschaufeln austauschbar sind, daß durch entsprechende manuelle Maßnahmen an den Wurfschaufeln der der Grenze zugekehrten Streuscheibe das gewünschte Streubild entsteht. Diese bekannten Maßnahmen setzen manuelle Eingriffe voraus, die wiederum nur bei Stillstand möglich sind und das Verlassen des Traktors voraussetzen. Dies ist unkomfortabel. Ferner kommt es beim manuellen Einstellen zu unerwünschten Düngerkontaminationen an den Händen.

Diese Nachteile werden bei einem bekannten Düngerstreuer (DE 198 56 926 A) durch einen hydraulischen Antrieb der Streuscheiben sowie dadurch vermieden, daß die Drehzahl des Antriebs der grenznahen Streuscheibe reduziert, gegebenenfalls auch der Aufgabepunkt verlagert wird. Eine kombinierte mechanisch-hydraulische Antriebsvariante mit variabler Drehzahl (DE 199 29 356 A) bietet im wesentlichen die gleiche Möglichkeit. Der besondere Vorteil besteht darin, daß das Grenzstreuen ohne Stillstand möglich ist, so daß der Landwirt den Traktor nicht mehr verlassen muß und insbesondere nicht mehr mit den düngerbelasteten Streuscheiben in Berührung kommt. Diese technischen Lösungen sind allerdings aufwendig und finden deshalb nur bei größeren Streuern Anwendung.

Für kleinere Streuer sind statt dessen sogenannte Grenzstreuschirme bekannt (DE 34 20 669 A, EP 0 663 143 A, EP 0 988 780 A). Diese Grenzstreuschirme, die fest am Traktor anbaubar oder aus einer unwirksamen Lage in eine wirksame Lage bringbar sind, weisen mehrere aufrecht stehende Leitplatten auf, die im wesentlichen die Aufgabe haben, die die Streuscheibe zur Grenze hin verlassenden Streugutpartikel abzulenken. Die Leitplatten sind zu diesem Zweck je nach ihrer Position bezüglich der Streuscheibe unterschiedlich geformt, beispielsweise gekrümmt oder unter unterschiedlichen Winkeln abgeknickt. Dabei können Einrichtungen ähnlichen Aufbaus für beide Streuscheiben vorgesehen sein (DE 34 20 669, EP 0 663 143 A). Dies ist mit dem Nachteil verbunden, daß an beiden Streuscheiben eingegriffen werden muß, damit keine Streuscheibe den Dünger über die Feldgrenze hinausstreut.

Bei einem anderen bekannten Zentrifugalstreuer für große Arbeitsbreiten (DE 38 20 681 A) ist zur beidseitigen Reduzierung der Arbeitsbreite an der jeweils äußeren Seite der beiden Streuscheiben eine Leiteinrichtung aus gekrümmten Leitplatten vorgesehen, welche die Flugrichtung der zur Seite abgehenden Düngerpartikel durch starke Reflexionen derart ändern soll, daß unter Abbau deren kinetischer Energie auch ein Streuen mit kleiner Arbeitsbreite möglich ist. Bei dieser Ausführung sind an den Enden der gekrümmten Leitplatten nochmals im wesentlichen ebene Leitplatten schwenkbar angeschlossen.

Schließlich ist es bekannt (DE 44 33 475) an der der Grenze zugewandten Schleuderscheibe eine Grenzstreueinrichtung anzuordnen, die gleichfalls aufrechte Leitplatten aufweist, die entweder an ihrem inneren Ende schwenkbar gelagert oder mit beiden Enden verlagerbar sind und gegebenenfalls auch noch aus der aufrechten Ebene zu einer gekrümmten Fläche verwunden werden, was entsprechend flexible Materialien voraussetzt. Im erstgenannten Fall ist der Eingangs- und Ausgangswinkel der Flugrichtung der Streugutpartikel derselbe. Damit ist keine ausreichende Anpassung an verschiedene Düngersorten mit unterschiedlichen Flugeigenschaften möglich. Die zweite sehr aufwendige Ausführung führt zu einer Änderung sowohl des Eintrittswinkels als auch des Austrittswinkels, gegebenenfalls auch der Ballistik der Streugutpartikel, weshalb keine oder nur eine sehr aufwendige exakte Einstellung der Grenzstreubreite in Abhängigkeit von der Arbeitsbreite bzw. der Düngersorte möglich ist. Ähnliches gilt für eine andere bekannte Ausführung (EP 0 988 780 A), bei der die Grenzstreueinrichtung mit starr abgewinkelten Leitplatten konzentrisch um die Streuscheibenachse verlagerbar ist. Hierdurch ergibt sich bei etwa gleichem Eingangswinkel ein anderer Abgangswinkel der Düngerpartikel. Die Umstellung von Grenzstreuen auf Randstreuen und umgekehrt ist relativ umständlich. Praktische Versuche haben gezeigt, daß auch die Einstellung auf verschiedene Düngersorten nur unzureichend genau möglich ist.

Der Erfindung liegt die Aufgabe zugrunde, unabhängig von der variablen Arbeitsbreite den Zentrifugalstreuer auf entsprechende Grenzstreubreiten für beliebige Düngersorten exakt einstellen zu können.

Ausgehend von dem Zentrifugalstreuer gemäß Oberbegriff des Anspruchs 1, bei dem die Leitplatten an ihrem inneren Ende schwenkbar gelagert sind, so daß der Eingangswinkel der Streugutpartikel einstellbar ist, wobei die Leitplatten zweiteilig ausgebildet und die äußeren Leitplatten mit ihren inneren Enden an aufrechten Achsen winkelverstellbar gelagert sind, wird die Aufgabe dadurch gelöst, daß die inneren Leitplatten etwa in Abflugrichtung der Streugutpartikel und die äußeren Leitplatten abweichend davon einstellbar sind.

Durch die erfindungsgemäße Ausbildung gemäß Anspruch 1 läßt sich zunächst gewährleisten, daß die Streugutpartikel entsprechend ihrer je nach Streugutsorte unterschiedlichen Abflugrichtungen durch die inneren Leitplatten nicht oder nur unwesentlich reflektiert werden, was zu unkontrollierten Abgangswinkeln am Austritt aus der Grenzstreueinrichtung führen würde. Die inneren Leitplatten lassen sich auf die Abflugrichtung der Streugutpartikel sortenabhängig einstellen. Der Abgangswinkel wird hingegen maßgeblich durch Verlagerung der äußeren Leitplatten eingestellt.

Durch die erfindungsgemäße Ausbildung sind folgende Einstellmöglichkeiten gegeben: Die innere Leitplatte wird so eingestellt, daß die die Streuscheibe verlassenden Streugutpartikel überhaupt nicht reflektiert werden, d.h. die Leitplatte ist zumindest eingangsseitig etwa parallel zur Flugrichtung der Streugutpartikel angeordnet. Die äußere Leitplatte kann dann entweder vollständig aus der Flugbahn herausgeschwenkt werden, so daß die Streugutpartikel nicht oder nur wenig beeinflußt die Grenzstreueinrichtung verlassen. Eine solche Einstellung ist insbesondere für Düngersorten mit schlechten Flugeigenschaften geeignet, bei denen die Streubreite nicht oder nur wenig reduziert werden soll. Dies gilt beispielsweise für größere Arbeitsbreiten der Düngersorte Kali. Statt der vorgenannten Einstellung kann die äußere Leitplatte in einem stumpfen Winkel (<180°) zur inneren Leitplatte angestellt werden, so daß die Streugutpartikel im äußeren Bereich abgelenkt werden, die Streugutpartikel die Grenzstreueinrichtung also mit einem anderen Abgangswinkel als dem Eingangswinkel verlassen. Statt dessen kann auch die innere Leitplatte unter einem Winkel zur Flugrichtung der Streugutpartikel eingestellt werden, so daß der Eingangswinkel geändert wird. Auch hierbei kann wiederum die äußere Leitplatte in einer Position angeordnet sein, in der sie die Abflugrichtung nicht beeinflußt, oder aber in eine solche Position eingestellt werden, daß sich bei gleichzeitigem Abbau kinetischer Energie insgesamt eine starke Ablenkung für beispielsweise kleine Grenzstreubreiten oder Dünger mit guten Flugeigenschaften, z.B. Kalkammonsalpeter (KAS), ergibt.

Die Leitplatten können eben ausgebildet sein, sind aber vorzugsweise schwach gekrümmt derart, daß sie die Streugutpartikel nach hinten und/oder zur Feldgrenze hin umlenken.

Vorzugsweise sind die inneren, wie auch die äußeren Leitplatten jeweils gruppenweise oder gemeinsam verstellbar, um durch einfache Einstellmaßnahmen den Zentrifugalstreuer auf verschiedene Grenzstreubreiten in Abhängigkeit von verschiedenen Düngersorten einstellen zu können.

In weiterhin bevorzugter Ausführung ist vorgesehen, daß die aufrechte Achse für die Lagerung des inneren Endes der äußeren Leitplatten am äußeren Ende der inneren Leitplatte angeordnet ist.

Durch diese Ausführung ergibt sich ein einwandfreier Übergang von inneren zu äußeren Leitplatten.

Sind die gemeinsamen Achsen der inneren und äußeren Leitplatten jeweils miteinander gekoppelt und gemeinsam verlagerbar, so daß das innere Ende der äußeren Leitplatte der Bewegung des äußeren Endes der inneren Leitplatte folgt und Relativpositionen zwischen beiden Platten problemlos einstellbar sind.

In weiterhin vorteilhafter Ausführung ist vorgesehen, daß die äußeren Leitplatten mit Abstand von ihren Lagerachsen gekoppelt und gemeinsam verlagerbar sind. Auf diese Weise lassen sich auch die äußeren Leitplatten gemeinsam auf die gewünschten Winkel einstellen.

Eine bevorzugte Variante zeichnet sich dadurch aus, daß die inneren Leitplatten mit ihrem inneren Ende an einem Hauptträger der Einrichtung gelagert und mit ihrem anderen, die gemeinsame Achse mit den äußeren Leitplatten aufweisenden Ende, in Führungen des Hauptträgers geführt sind.

Die Grenz- oder Randstreueinrichtung weist also einen Hauptträger auf, an dem die inneren Leitplatten an ihrem inneren Ende gelagert und an ihrem anderen Ende geführt sind, wodurch zugleich die äußeren Leitplatten mit ihrem inneren Ende über die gemeinsame Achse geführt sind. Die gemeinsame Achse kann dabei das Führungsorgan bilden.

In weiterhin vorteilhafter Ausführung ist die gemeinsame Achse in einem Hilfsträger gelagert und sind die äußeren Leitplatten mit Abstand von der Achse in Führungen des Hilfsträgers geführt. Durch Verlagern des Hilfsträgers werden also einerseits die inneren Leitplatten bzw. die jeweils gemeinsame Achse mit den äußeren Leitplatten in der Führung des Hauptträgers verschoben und zugleich die relative Winkellage zwischen beiden geändert. Andererseits läßt sich die Winkellage der äußeren Leitplatten durch ihre Führung im Hilfsträger einstellen.

Hierzu sind vorzugsweise die äußeren Leitplatten über ein am Hilfsträger geführtes Stellglied miteinander gekoppelt, so daß sie gemeinsam gegenüber den inneren Leitplatten verstellbar sind.

Zweckmäßigerweise sind den inneren und den äußeren Leitplatten je eine skalenartige Markierung für ihre Winkeleinstellung zugeordnet, wobei die beiden Markierungen unterschiedlich sind, beispielsweise kann die eine Markierung aus Buchstaben, die andere aus Zahlen gebildet sein.

Die skalenartige Markierung für die inneren Leitplatten ist vorteilhafterweise auf dem Hauptträger angeordnet, während die Einstellmarke am Hilfsträger angeordnet sein kann, beispielsweise durch eine Kante des Hilfsträgers gebildet ist.

Die skalenartige Markierung für die äußeren Leitplatten ist zweckmäßigerweise am Hilfsträger angeordnet und wird die Einstellmarke von einer äußeren Leitplatte gebildet.

Bei Zentrifugalstreuern mit veränderlichem Abstand der Achsen der Streuscheiben ist vorgesehen, daß der Hauptträger der Einrichtung der Abstandsveränderung der Streuscheiben folgt.

Ferner ist von Vorteil, wenn der Hilfsträger und/oder das Stellglied über einen Antrieb mit Fernbedienung verstellbar sind, so daß die inneren und äußeren Leitplatten vom Traktor aus betätigt werden können.

Ist der Zentrifugaldüngerstreuer mit einem Bordcomputer ausgestattet, in welchem die Arbeitsbreiten für verschiedene Düngersorten eingegeben und auf einem Graphikdisplay abrufbar sind, ist in einer bevorzugten Ausführung der Erfindung vorgesehen, daß im Bordcomputer die Einstellwerte für das Grenzstreuen und/oder das Randstreuen für die verschiedenen Düngersorten eingegeben und in Form der jeweiligen Markierungen für die inneren und äußeren Leitplatten auf dem Graphikdisplay abrufbar sind.

Der im Graphikdisplay erscheinende Einstellwert kann dann manuell oder aber über die Fernbedienung mittels des Antriebs auf die Leitplatten übertragen werden.

Statt dessen und vorzugsweise dienen die Einstellwerte jedoch als Steuergröße für den Antrieb des Hilfsträgers und/oder des Stellgliedes, so daß der Landwirt an dem Computer lediglich den Befehl "Grenzstreuen" eingeben muß, um bei vorgegebener Arbeitsbreite und Düngersorte die gewünschte Grenzstreubreite mit einem exakten Grenzstreubild zu erhalten.

Die erfindungsgemäß ausgebildete Einrichtung zum Grenz- oder Randstreuen ist vorzugsweise bei solchen Düngerstreuern einsetzbar, deren Streuscheiben winkelverstellbare und/oder längenveränderliche Wurfschaufeln aufweisen oder bei solchen Düngerstreuern mit wenigstens zwei austauschbaren Sätzen von Streuscheiben. Solche Düngerstreuer lassen sich bei vergleichsweise geringem Kostenaufwand über einen größeren Arbeitsbereich für beliebige Düngersorten relativ genau einstellen.

Nachstehend ist die Erfindung anhand von in der Zeichnung wiedergegebenen Ausführungsbeispielen beschrieben. In der Zeichnung zeigen:
- Fig.1: eine Draufsicht auf eine Streuscheibe eines Zweischeibenstreuers mit der Grenzstreueinrichting in einer Betriebsstellung;
- Fig.2: eine der Fig.1 entsprechende Draufsicht mit der Grenzstreueinrichtung in einer anderen Betriebsstellung und
- Fig.3: eine der Fig.1 ähnliche Draufsicht mit einer detaillierten Darstellung der Grenzstreueinrichtung.

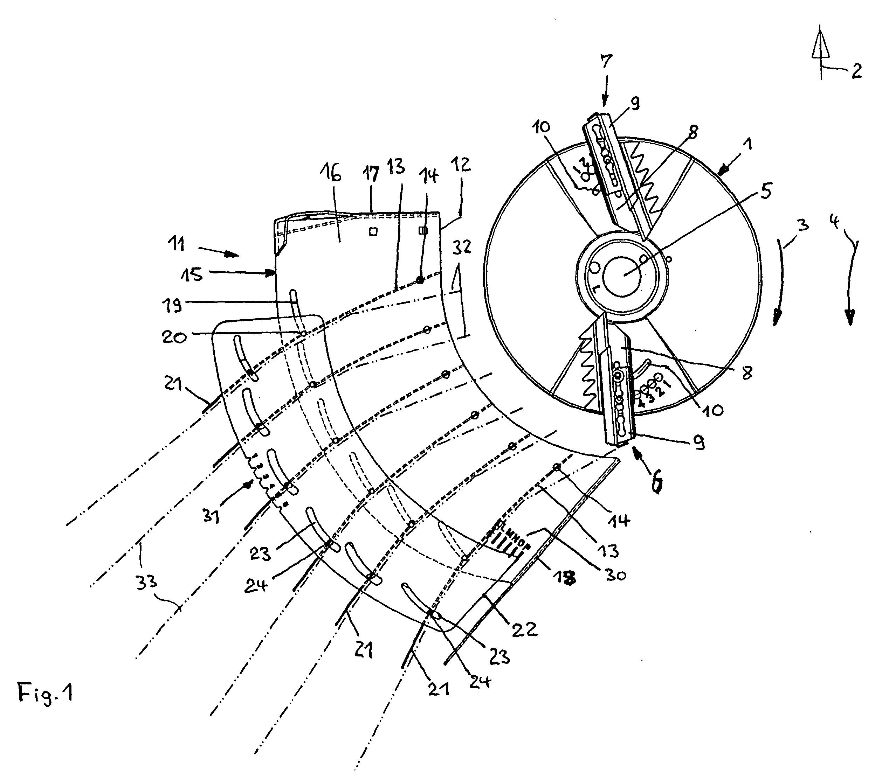

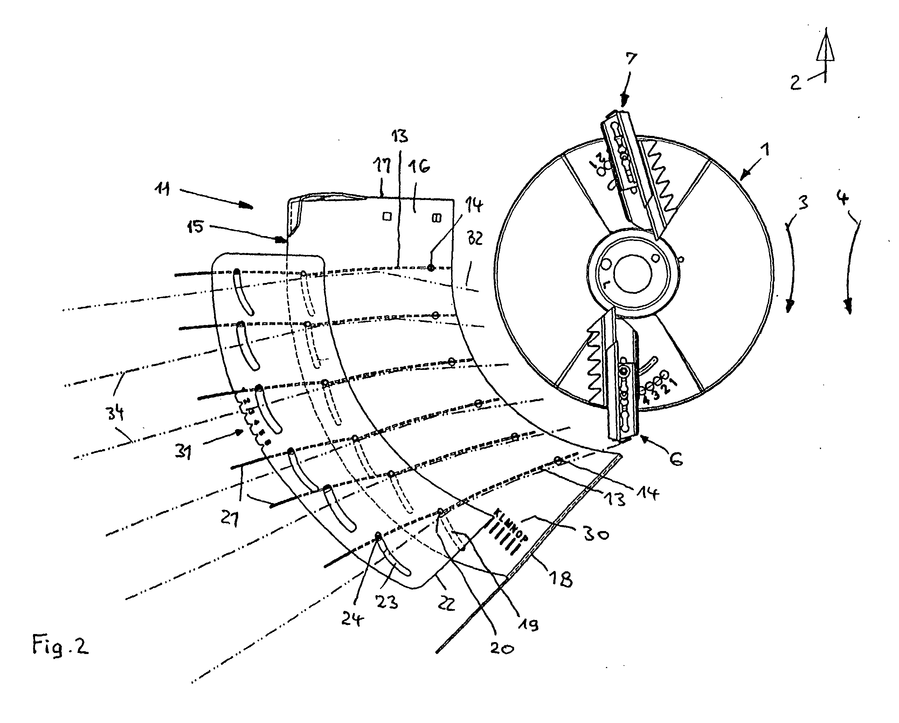

Fig.1 und 2 zeigen eine von zwei Streuscheiben 1 eines nicht näher dargestellten Zweischeibenstreuers, aus dessen Vorratsbehälter das Streugut in einstellbarer Menge auf die Streuscheiben aufgegeben wird. Die Fahrtrichtung des Streuers ist mit dem Richtungspfeil 2 angedeutet. Die beiden Streuscheiben 1 laufen gegensinnig und an den einander zugekehrten Seiten entgegen der Fahrtrichtung 2 um, wie dies mit den Richtungspfeilen 3,4 angedeutet ist. Diese Verstellmöglichkeiten dienen zur Einstellung der Arbeitsbreite unter Berücksichtigung der Streugutsorte.

Die Streuscheibe 1 sitzt auf einer Antriebsachse 5 und weist zwei Wurfflügel 6, 7 auf, die beim gezeigten Ausführungsbeispiel aus zwei Teilen 8, 9 bestehen, von denen das äußere Teil 9 ausziehbar ist, so daß die Wurfflügel in unterschiedlichen Längen eingestellt werden können. Das innere Teil 8 jedes Wurfflügels ist in einem teilkreisförmigem Schlitz 10 der Streuscheibe 1 winkelverstellbar geführt und in den mit Zahlen angedeuteten Positionen festsetzbar.

Der Streuscheibe 1 ist eine Einrichtung 11 zum Grenz- oder Randstreuen zugeordnet, die an ihrer Eingangsseite 12 konzentrisch zur Streuscheibe 1 verläuft. Diese Einrichtung weist innere Leitplatten 13 auf, die schwach gekrümmt und im wesentlichen parallel angeordnet sind. Die Leitplatten 13 sind an ihren der Streuscheibe 1 zugekehrten inneren Enden mit im wesentlichen senkrechten Achsen 14 an einem Hauptträger 15 gelagert, der zwei parallele Platten 16 aufweist, zwischen denen die Leitplatten angeordnet sind. Die Platten 16 sind an ihren Enden durch vertikale Platten 17 zu dem kastenförmigen Hauptträger 15 geschlossen. An ihrem äußeren Ende sind die inneren Leitplatten 13 in Schlitzen 19 des Hauptträgers 15 geführt und in definierten Positionen, die auf einer Skala 30 beispielsweise mit Großbuchstaben angegebenen sind, einstellbar. Zur Führung dienen Zapfen 20, die in die Schlitze 19 eingreifen. Die Zapfen 20 sitzen mit ihren Enden in einem Hilfsträger 22 und dienen zugleich als Schwenkzapfen für die inneren Enden äußerer Leitplatten 21. Dieser wiederum weist Führungsschlitze 23 auf, in die die äußeren Leitplatten 21 mittels Bolzen 24 mit Abstand von ihren Schwenkzapfen 20 winkelverstellbar geführt sind. Die äußeren Leitplatten können in verschiedenen Positionen, die am äußeren Rand des Hilfsträgers 22 mit Zahlen einer Skala 31 angedeutet sind, eingestellt werden.

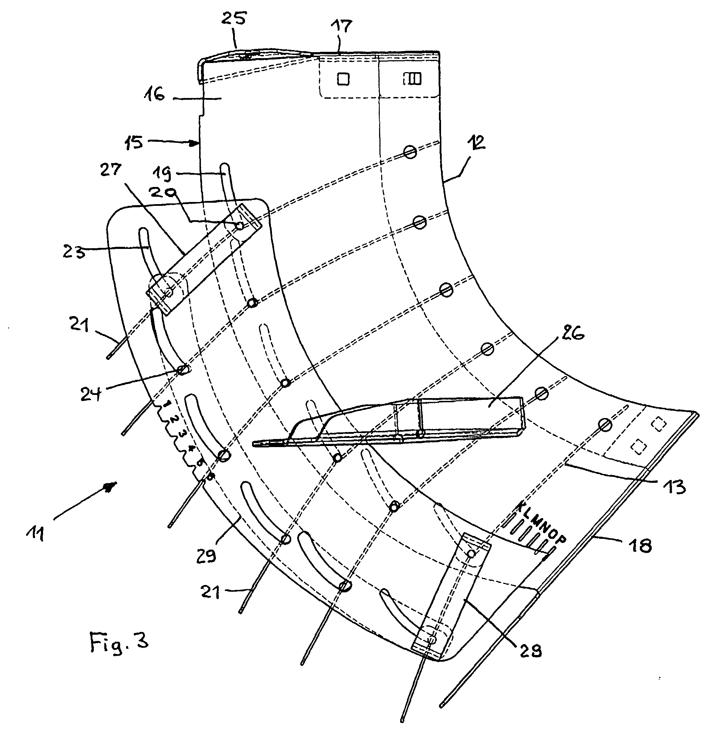

Die Einrichtung 11 zum Grenz- oder Randstreuen weist am Hauptträger 15 Konsolen 25, 26 auf (Fig.3), mit denen sie am Rahmen oder einem anderen ortsfesten Teil des Zweischeibenstreuers befestigt ist. Ferner sind auf dem Hilfsträger 22 im Bereich seiner Enden je ein Bügel 27, 28 angeordnet, in welche die Zapfen 20 bzw. Bolzen 24 eingreifen. Die Bügel 27, 28 sind über ein sämtliche Bolzen 24 der äußeren Leitplatten 21 erfassendes Stellglied 29 miteinander verbunden.

Die inneren Leitplatten 13 können mittels des Hilfsträgers 22, die äußeren Leitplatten 21 mittels der Bügel 27, 28 und des Stellgliedes 29 jeweils gemeinsam, im übrigen aber unabhängig voneinander in verschiedenen Winkelpositionen zu der in Fig.1 und 2 mit stichpunktierten Linien 32 angedeuteten Flugrichtung der die Streuscheibe verlassenden Streugutpartikel angestellt werden. Die inneren Leitplatten 13 werden dabei etwa in Flugrichtung (Fig.2) oder in einer davon abweichenden Position (Fig.1) eingestellt, um Reflexionen weitestgehend zu vermeiden. Fig.1 zeigt des weiteren eine Einstellung der äußeren Leitplatten 21, die gegenüber den inneren Leitplatten einen extrem stumpfen Winkel bilden, so daß die Streugutpartikel die Einrichtung in der Abflugrichtung 33 verlassen. Diese Einstellung ist beispielsweise für kleine Grenzstreubreiten und/oder Dünger mit guten Flugeigenschaften vorgesehen. Fig.2 zeigt eine Einstellung, bei der sich die inneren Leitplatten 13 in ihrer anderen Endposition befinden und eingangsseitig etwa entsprechend der Flugrichtung 32 angestellt sind. Die äußeren Leitplatten 21 sind gegenüber der Position gemäß Fig.1 in eine unwirksame Position zurückgestellt, so daß die Streugutpartikel die Einrichtung 11 mit einer Abflugrichtung 34 verlassen, in die sie lediglich durch die Stellung der inneren Leitplatten 13 abgelenkt werden. Diese Position ist für große Grenzstreubreiten und/oder Dünger mit schlechten Flugeigenschaften vorgesehen.

Die Einstellung der Leitplatten 13, 21 kann manuell oder über Antrieb fernbedient vom Traktor aus erfolgen. Ist der Traktor mit einem Bordcomputer für den Streuer ausgestattet, können die Grenzstreubreiten für verschiedene Düngersorten und die zugehörigen Einstellwerte für die Leitplatten eingegeben und automatisch als Stellgrößen für die Antriebe herangezogen werden.

## Patentansprüche

1. Zentrifugalstreuer, insbesondere Düngerstreuer, mit zwei um parallele Achsen gegensinnig umlaufenden Streuscheiben, die das aus einem Behälter dosiert aufgegebene Streugut in zwei einander überlappenden Streufächern abgeben, und mit einer wahlweise in wenigstens einen der Streufächer einbringbaren Einrichtung (11) zum Grenz- oder Randstreuen mit aufrechten Leitplatten (13, 21) zur einseitigen Reduzierung der Streubreite und Änderung des Streubildes, die an ihren der Streuscheibe (1) zugekehrten inneren Enden an aufrechten Achsen (14) winkelverstellbar gelagert sind, wobei die Leitplatten (13, 21) zweiteilig ausgebildet und die äußeren Leitplatten (21) mit ihren inneren Enden an aufrechten Achsen (10) winkelverstellbar gelagert sind, **dadurch gekennzeichnet, daß** die inneren Leitplatten (13) etwa in Flugrichtung (32) der Streugutpartikel und die äußeren Leitplatten (21) abweichend davon einstellbar sind.

2. Zentrifugalstreuer nach Anspruch 1, **dadurch gekennzeichnet, daß** die inneren und/oder die äußeren Leitplatten (13, 21) im wesentlichen eben ausgebildet sind.

3. Zentrifugalstreuer nach Anspruch 2, **dadurch gekennzeichnet, daß** die inneren und/oder die äußeren Leitplatten (13, 21) leicht gekrümmt sind derart, daß sie die Streugutpartikel nach hinten und/oder seitlich zur Feldgrenze umlenken.

4. Zentrifugalstreuer nach einem der Ansprüche 1 bis 3, **dadurch gekennzeichnet, daß** die inneren Leitplatten (13) gruppenweise oder gemeinsam verstellbar sind.

5. Zentrifugalstreuer nach einem der Ansprüche 1 bis 4, **dadurch gekennzeichnet, daß** die äußeren Leitplatten (13) gruppenweise oder gemeinsam verstellbar sind.

6. Zentrifugalstreuer nach einem der Ansprüche 1 bis 5, **dadurch gekennzeichnet, daß** die aufrechte Achse (20) für die Lagerung des inneren Endes der äußeren Leitplatten (21) am äußeren Ende der inneren Leitplatte (13) angeordnet ist.

7. Zentrifugalstreuer nach einem der Ansprüche 1 bis 6, **dadurch gekennzeichnet, daß** die gemeinsamen Achsen (20) der inneren und äußeren Leitplatten (13, 21) miteinander gekoppelt und gemeinsam verlagerbar sind.

8. Zentrifugalstreuer nach einem der Ansprüche 1 bis 7, **dadurch gekennzeichnet, daß** die äußeren Leitplatten (21) mit Abstand von ihren Lagerachsen (20) gekoppelt und gemeinsam verlagerbar sind.

9. Zentrifugalstreuer nach einem der Ansprüche 1 bis 8, **dadurch gekennzeichnet, daß** die inneren Leitplatten (13) mit ihrem inneren Ende an einem Hauptträger (15) der Einrichtung (11) gelagert und mit ihrem anderen, die gemeinsame Achse (20) mit den äußeren Leitplatten (21) aufweisenden Ende, in Führungen (19) des Hauptträgers (15) geführt sind.

10. Zentrifugalstreuer nach einem der Ansprüche 1 bis 9, **dadurch gekennzeichnet, daß** die gemeinsame Achse (20) das Führungsorgan in der Führung (19) bildet.

11. Zentrifugalstreuer nach einem der Ansprüche 1 bis 10, **dadurch gekennzeichnet, daß** die gemeinsamen Achsen (20) in einem Hilfsträger (22) gelagert und die äußeren Leitplatten (21) mit Abstand von den Achsen (20) in Führungen (23) des Hilfsträgers (22) geführt sind.

12. Zentrifugalstreuer nach einem der Ansprüche 1 bis 11, **dadurch gekennzeichnet, daß** die äußeren Leitplatten (21) über ein am Hilfsträger (22) geführtes Stellglied (29) miteinander gekoppelt sind.

13. Zentrifugalstreuer nach einem der Ansprüche 1 bis 12, **dadurch gekennzeichnet, daß** den inneren und den äußeren Leitplatten (13, 21) je eine skalenartige Markierung (30, 31) für ihre Winkeleinstellung zugeordnet ist, und daß die beiden Markierungen unterschiedlich sind.

14. Zentrifugalstreuer nach Anspruch 13, **dadurch gekennzeichnet, daß** die eine Markierung (30) aus Buchstaben, die andere (31) aus Zahlen gebildet ist.

15. Zentrifugalstreuer nach einem der Ansprüche 1 bis 14, **dadurch gekennzeichnet, daß** die skalenartige Markierung (30) für die inneren Leitplatten (13) auf dem Hauptträger (15) angeordnet ist und die Einstellmarke am Hilfsträger (22) angeordnet ist.

16. Zentrifugalstreuer nach einem der Ansprüche 1 bis 15, **dadurch gekennzeichnet, daß** die skalenartige Markierung (31) für die äußeren Leitplatten (21) am Hilfsträger (22) angeordnet und die Einstellmarke von einer äußeren Leitplatte (21) gebildet ist.

17. Zentrifugalstreuer nach einem der Ansprüche 1 bis 16, bei denen der Abstand der Achsen der Streuscheiben (1) veränderbar sind, **dadurch gekennzeichnet, daß** der Hauptträger (15) der Einrichtung (11) der Abstandsveränderung der Streuscheiben (1) folgt.

18. Zentrifugalstreuer nach einem der Ansprüche 1 bis 17, **dadurch gekennzeichnet, daß** der Hilfsträger (22) und/oder das Stellglied (29) über einen Antrieb mit Fernbedienung verstellbar sind.

19. Zentrifugalstreuer nach einem der Ansprüche 1 bis 18 mit einem Bordcomputer, in welchem mehrere Arbeitsbreiten für verschiedene Düngersorten gespeichert und auf einem Graphikdisplay abrufbar sind, **dadurch gekennzeichnet, daß** im Bordcomputer die Einstellwerte der Leitplatten (13, 21) für das Grenzstreuen und/oder das Randstreuen für die verschiedenen Düngersorten eingegeben und in Form der jeweiligen Markierungen (30, 31) für die inneren und äußeren Leitplatten (13, 21) auf dem Graphikdisplay abrufbar sind.

20. Zentrifugalstreuer nach einem der Ansprüche 1 bis 19, **dadurch gekennzeichnet, daß** die Einstellwerte als Steuergrößen für den Antrieb des Hilfsträgers (22) und/oder des Stellgliedes (29) dienen.

21. Verwendung einer Einrichtung zum Grenz- oder Rand streuen nach einem der Ansprüche 1 bis 20 bei Düngerstreuern, deren Streuscheiben (1) winkelverstellbare und/oder längenveränderliche und/oder austauschbare Wurfschaufeln (6, 7) aufweisen.

22. Verwendung einer Einrichtung zum Grenz- oder Randstreuen nach einem der Ansprüche 1 bis 20 bei Düngerstreuern mit wenigstens zwei austauschbaren Sätzen von Streuscheiben (1).

## Claims

1. Centrifugal spreader, particularly fertilizer spreader, having two spreading disks rotatable in opposition about parallel axes, which deliver the spreading material supplied in dosed manner from a container in two mutually overlapping spreading fans, and with a device (11) which, as desired, can be brought into at least one of the spreading fans for edge or boundary spreading with upright guide plates (13, 21) for the unilateral reduction of the spreading width and modifying the spreading pattern, and which at their inner ends facing the spreading disk (1) are mounted in angularly adjustable manner on upright spindles (14), the guide plates (13, 21) being constructed in two parts and the outer guide plates (21) are mounted in angularly adjustable manner by their inner ends on upright spindles (10), **characterized in that** the inner guide plates (13) are adjustable roughly in the flight direction (32) of the spreading material particles and the outer guide plates (21) are adjustable diverging therefrom.

2. Centrifugal spreader according to claim 1, **characterized in that** the inner and/or outer guide plates (13, 21) have a substantially planar construction.

3. Centrifugal spreader according to claim 1, **characterized in that** the inner and/or outer guide plates (13, 21) are slightly curved in such a way that they deflect the spreading material particles rearwards and/or laterally to the field boundary.

4. Centrifugal spreader according to one of the claims 1 to 3, **characterized in that** the inner guide plates (13) are adjustable groupwise or jointly.

5. Centrifugal spreader according to one of the claims 1 to 4, **characterized in that** the outer guide plates (13) are adjustable groupwise or jointly.

6. Centrifugal spreader according to one of the claims 1 to 5, **characterized in that** the upright spindle (20) for mounting the inner end of the outer guide plates (21) is located on the outer end of the inner guide plate (13).

7. Centrifugal spreader according to one of the claims 1 to 6, **characterized in that** the common spindles (20) of the inner and outer guide plates (13, 21) are coupled together and jointly displaceable.

8. Centrifugal spreader according to one of the claims 1 to 7, **characterized in that** the outer guide plates (21) are coupled and jointly displaceable spaced from their bearing spindles (20).

9. Centrifugal spreader according to one of the claims 1 to 8, **characterized in that** the inner end of the inner guide plates (13) is mounted on a main support (15) of the device (11) and guided with its other end having the joint spindle (20) with the outer guide plates (21) are guided in guides (19) of the main support (15).

10. Centrifugal spreader according to one of the claims 1 to 9, **characterized in that** the common spindle (20) forms the guide member in the guide (19).

11. Centrifugal spreader according to one of the claims 1 to 10, **characterized in that** the common spindles (20) are mounted in an auxiliary support (22) and the outer guide plates (21) are guided, spaced from the spindles (20), in guides (23) of the auxiliary support (22).

12. Centrifugal spreader according to one of the claims 1 to 11, **characterized in that** the outer guide plates (21) are coupled together by means of a control element (29) guided on the auxiliary support (22).

13. Centrifugal spreader according to one of the claims 1 to 12, **characterized in that** with each of the inner and outer guide plates (13, 21) is associated a scale-like marking (30, 31) for their angular adjustment and that the two markings are different.

14. Centrifugal spreader according to claim 13, **characterized in that** one marking (30) is formed by letters and the other marking (31) by numbers.

15. Centrifugal spreader according to one of the claims 1 to 14, **characterized in that** the scale-like marking (30) for the inner guide plates (13) is located on the main support (15) and the setting mark on the auxiliary support (22).

16. Centrifugal spreader according to one of the claims 1 to 15, **characterized in that** the scale-like marking (31) for the outer guide plates (21) is located on the auxiliary support (22) and the setting mark is formed by an outer guide plate (21).

17. Centrifugal spreader according to one of the claims 1 to 16, wherein the spacing of the spindles of the spreading disks (1) is variable, **characterized in that** the main support (15) of the device (11) follows the spacing change of the spreading disks (1).

18. Centrifugal spreader according to one of the claims 1 to 17, **characterized in that** the auxiliary support (22) and/or the control element (29) are adjustable by means of a drive with remote control.

19. Centrifugal spreader according to one of the claims 1 to 18, having an on-board computer in which are stored several working widths for different fertilizer types and which can be polled on a graphic display, **characterized in that** into the on-board computer are inputted the setting values of the guide plates (13, 21) for boundary spreading and/or edge spreading for the different fertilizer types and can be polled on the graphic display in the form of markings (30, 31) for the inner and outer guide plates (13, 21).

20. Centrifugal spreader according to one of the claims 1 to 19, **characterized in that** the setting values serve as control quantities for the drive of the auxiliary support (22) and/or the control element (29).

21. Use of a device for edge or boundary spreading according to one of the claims 1 to 20, in fertilizer spreaders, whose spreading disks (1) have angularly adjustable and/or length-variable and/or interchangeable spreading blades (6, 7).

22. Use of a device for edge or boundary spreading according to one of the claims 1 to 20, in fertilizer spreaders with at least two interchangeable sets of spreading disks (1).

## Revendications

1. Epandeur centrifuge, en particulier épandeur d'engrais, comprenant deux disques d'épandage tournant en sens opposé autour de deux axes parallèles délivrant le matériau à épandre libéré de manière dosée hors d'un réservoir dans deux éventails d'épandage se chevauchant, et comportant un dispositif (11) pouvant être monté au choix dans au moins un des éventails d'épandage pour l'épandage en limite ou de bordure présentant des panneaux verticaux de guidage (13,21) pour la réduction unilatérale de la largeur d'épandage et la modification de l'image d'épandage, montés à angle réglable par leurs extrémités intérieures en regard du disque d'épandage (1) sur des axes verticaux (14), les panneaux de guidage (13, 21) étant réalisés. en deux parties et les panneaux de guidage extérieurs (21) montés à angle réglable par leurs extrémités intérieures sur des axes verticaux (10), **caractérisé en ce que** les panneaux de guidage intérieurs (13) peuvent être réglés sensiblement dans la direction d'envol (32) des particules de matériau à épandre et les panneaux de guidage (21) extérieurs dans une direction différente.

2. Epandeur centrifuge selon la revendication 1, **caractérisé en ce que** les panneaux de guidage (13,21) intérieurs et/ou extérieurs sont conformés sensiblement plans.

3. Epandeur centrifuge selon la revendication 1, **caractérisé en ce que** les panneaux de guidage (13,21) intérieurs et/ou extérieurs sont légèrement cintrés de sorte qu'ils dévient les particules de matériau à épandre vers l'arrière et/ou latéralement par rapport à la limite du champ.

4. Epandeur centrifuge selon l'une quelconque des revendications 1 à 3, **caractérisé en ce que** les panneaux de guidage intérieurs (13) sont réglables par groupes ou ensemble.

5. Epandeur centrifuge selon l'une quelconque des revendications 1 à 4, **caractérisé en ce que** les plaques de guidage extérieures (21) sont réglables par groupes ou ensemble.

6. Epandeur centrifuge selon l'une quelconque des revendications 1 à 5, **caractérisé en ce que** l'axe vertical (20) pour le montage de l'extrémité intérieure des panneaux extérieurs (21) est disposé à l'extrémité extérieure des panneaux intérieurs (13).

7. Epandeur centrifuge selon l'une quelconque des revendications 1 à 6, **caractérisé en ce que** les axes communs (20) des panneaux de guidage intérieurs et extérieurs (13,21) sont couplés entre eux et déplaçables ensemble.

8. Epandeur centrifuge selon l'une quelconque des revendications 1 à 7, **caractérisé en ce que** les panneaux de guidage extérieurs (21) sont couplés à distance de leurs axes de palier (20) et déplaçables ensemble.

9. Epandeur centrifuge selon l'une quelconque des revendications 1 à 8, **caractérisé en ce que** les panneaux de guidage intérieurs (13) sont montés par leur extrémité intérieure sur un support principal (15) du dispositif (11) et guidés par leur autre extrémité présentant l'axe (20) en commun avec les panneaux de guidage extérieurs (21) dans des guidages (19) du support (15).

10. Epandeur centrifuge selon l'une quelconque des revendications 1 à 9, **caractérisé en ce que** l'axe commun (20) constitue l'organe de guidage dans le guidage (19).

11. Epandeur centrifuge selon l'une quelconque des revendications 1 à 10, **caractérisé en ce que** les axes communs (20) sont montés dans un support auxiliaire (22) et les panneaux de guidage extérieurs (21) sont guidés dans des guidages (23) du support auxiliaire (22) à distance des axes (20).

12. Epandeur centrifuge selon l'une quelconque des revendications 1 à 11, **caractérisé en ce que** les panneaux de guidage extérieurs (21) sont couplés entre eux au moyen d'une pièce de réglage (29) guidée dans le support auxiliaire (22).

13. Epandeur centrifuge selon l'une quelconque des revendications 1 à 12, **caractérisé en ce qu'**un marquage du type graduations (30,31) pour leur réglage angulaire est associé à chacun,des panneaux de guidage (13,21) intérieurs et extérieurs, et **en ce que** les deux marquages sont différents.

14. Epandeur centrifuge selon la revendication 13, **caractérisé en ce qu'**une graduation (30) est formée de chiffres, l'autre (31) de lettres.

15. Epandeur centrifuge selon l'une quelconque des revendications 1 à 14, **caractérisé en ce que** le marquage du type graduations (30) pour les panneaux intérieurs (13) est apposé sur le support principal (15) et la marque de réglage sur le support auxiliaire (22).

16. Epandeur centrifuge selon l'une quelconque des revendications 1 à 15, **caractérisé en ce que** le marquage du type graduations (31) pour les panneaux de guidage extérieurs (21) est apposé sur le support auxiliaire (22) et la marque de réglage est constituée par un panneau de guidage extérieur (21).

17. Epandeur centrifuge selon l'une quelconque des revendications 1 à 16, dans lequel l'intervalle entre les axes des disques d'épandage (1) est modifiable, **caractérisé en ce que** le support principal (15) du dispositif (11) suit la modification d'intervalle des disques d'épandage (1).

18. Epandeur centrifuge selon l'une quelconque des revendications 1 à 17, **caractérisé en ce que** le support auxiliaire (22) et/ou la pièce de réglage (29) sont réglables par un entraînement à commande à distance.

19. Epandeur centrifuge selon l'une quelconque des revendications 1 à 18 comprenant un ordinateur de bord dans lequel plusieurs largeurs d'épandage pour des types d'engrais différents sont mises en mémoire et peuvent être extraites sur un écran graphique, **caractérisé en ce que** les valeurs de réglage des panneaux de guidage (13,21) pour l'épandage en limite et/ou de bordure pour les différents types d'engrais sont entrées dans l'ordinateur de bord et peuvent être extraites sous la forme des marquages (30,31) pour chacun des panneaux de guidage (13,21) intérieurs et extérieurs sur l'écran graphique.

20. Epandeur centrifuge selon l'une quelconque des revendications 1 à 19, **caractérisé en ce que** les valeurs de réglage servent de grandeurs de commande pour l'entraînement du support auxiliaire (22) et/ou de la pièce de réglage (29).

21. Utilisation d'un dispositif pour l'épandage en limite ou de bordure selon l'une quelconque des revendications 1 à 20 sur des épandeurs d'engrais, dont les disques d'épandage (1) présentent des aubes éjectrices (6,7) à angle réglable et/ou à longueur variable et/ou interchangeables.

22. Utilisation d'un dispositif pour l'épandage en limite ou de bordure selon l'une quelconque des revendications 1 à 20 sur des épandeurs d'engrais comprenant au moins deux jeux interchangeables de disques d'épandage (1).
